(19) Europäisches Patentamt
European Patent Office
Office européen des brevets

(11) Numéro de publication: **0 004 217**
**A1**

(12) **DEMANDE DE BREVET EUROPEEN**

(21) Numéro de dépôt: 79400106.5

(22) Date de dépôt: 21.02.79

(51) Int. Cl.²: A 61 L 13/00
C 02 B 3/06

(30) Priorité: 24.02.78 FR 7805291

(43) Date de publication de la demande:
19.09.79 Bulletin 79/19

(84) Etats contractants désignés:
BE CH DE FR GB IT LU NL SE

(71) Demandeur: SOCIETE CHIMIQUE DE LA GRANDE PAROISSE AZOTE ET PRODUITS CHIMIQUES
8, rue Cognacq-Jay
F-75007 Paris(FR)

(72) Inventeur: Cohen, Guy
116,avenue Félix Faure
F-75015 Paris(FR)

(74) Mandataire: Bouton Neuvy, Liliane et al,
L'Air liquide, Société Anonyme pour L'Etude et L'Exploitation des Procédés Georges Claude 75, Quai d'Orsay
F-75321 Paris Cedex 7(FR)

(54) **Procédé de traitement bactéricide et bactériostatique d'un milieu pollué.**

(57) L'invention concerne un procédé de traitement bactéricide et bactériostatique d'un milieu pollué par des bactéries et streptocoques.

Selon le procédé on introduit dans le milieu pollué un mononitroalcool primaire de formule :

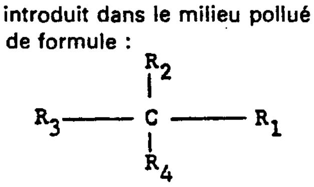

dans laquelle $R_1$ et $R_4$ sont un radical nitro ou hydroxyalkylinférieur et $R_2$ et $R_3$ sont un radical alkylinférieur ou hydroxyalkylinférieur.

Le procédé est applicable au traitement tertiaire des eaux des stations d'épuration urbaines et industrielles des eaux des piscines, des puits d'eau douce, des puits pétroliers en cours de forage et des boues extraites des boues des stations d'épuration, des moûts de betteraves et des liquers de papeterie.

EP 0 004 217 A1

Croydon Printing Company Ltd.

" PROCEDE DE TRAITEMENT BACTERICIDE ET BACTERIOSTATIQUE D'UN MILIEU POLLUE ".

---

La présente invention concerne un procédé de traitement bactéricide et bactériostatique d'un milieu pollué par des bactéries et streptocoques notamment des eaux, des eaux urbaines et industrielles et des boues et résidus.

Les stations de traitement des eaux d'égoûts urbains et industriels effectuent normalement deux opérations constituées par un traitement primaire ou décantation qui élimine les boues et détritus importants puis par un traitement secondaire par floculation au contact de boues activées et autres réactifs permettant de parvenir, après filtration à une eau limpide et désodorisée... mais d'épuration bactériologique très insuffisante surtout à certains moments de la journée. Ainsi 400.000 à 2 millions de bactéries et streptocoques par ml peuvent être rejetés dans le milieu naturel.

Dans certains cas assez nombreux, notamment celui des stations balnéaires, un traitement tertiaire s'impose avec pour objectif l'abaissement de la teneur de l'eau en bactéries et streptocoques à moins de 1 000 unités par ml.

On a proposé différents procédés pour ce traitement tertiaire.

Le traitement aux rayons ultra-violets de l'eau secondaire donne des résultats satisfaisants mais il est peu économique en raison du coût de l'équipement et

et des consommations en lampes ultra-violette et kilowatts.

Le traitement au chlore gazeux est souvent préconisé, mais des inconvénients écologiques semblent avoir été mis en évidence avec la formation possible de chloramines redoutées par les cancérologues. De plus, le chlore ne permet pas de détruire un certain nombre de virus et bactéries pathogènes.

Le traitement à l'ozone est bien connu pour la production d'eau potable avec décoloration et désodorisation plus poussées, mail il vient en complément à la chloration et non en substitution sans éliminer les risques cancérigènes.

On sait que les piscines sont un foyer intense de développement des algues et bactéries, jusqu'à ce jour la chloration est la méthode générale avec utilisation de pains d'hypochlorite de chaux.

Les nappes d'eaux souterraines atteintes par des puits forés peuvent être contaminées accidentellement par des bactéries sulfato réductrices, et la récupération de ces puits apparait souvent impossible et on doit renoncer à les exploiter.

En outre, les boues produites par les stations d'épuration d'eaux commencent à représenter des volumes considérables. En raison des variations de charges importantes et brusques, par exemple dans les stations estivales, on s'est orienté vers les procédés d'épuration physicochimique. Ces procédés permettent une mise en route quasi instantanée de l'installation mais produisent des quantités accrues de boues, dont il convient de se débarrasser rapidement pour éviter les inconvénients de nuisance tels odeur ou pollution agricole à l'épandage.

On a songé aux procédés biologiques traditionnels qui présentent bien des inconvénients, notamment la lenteur - 2 mois pour la digestion anaérobie - et la mise en oeuvre de volumes importants. Les traitements à la chaux et au chlore ferrique permettent de réduire sensible-

ment la population bactérienne, mais une réactivation naturelle dans le milieu est très probable et l'utilisation d'un bactéricide approprié à un tel milieu est nécessaire.

Il a été trouvé un procédé bactéricide et bactériostatique de mise en oeuvre simple et économique, efficace, sans inconvénient écologique et risque cancérigène, palliant les inconvénients précédemment exposés et applicable dans le traitement d'eaux secondaires urbaines ou industrielles, des piscines, des nappes d'eaux souterraines et des boues.

Le procédé présente une efficacité très élevée dès les premières heures subséquentes au traitement, suivie d'une dégradation tout aussi rapide en produits non toxiques ce qui n'entraine aucun inconvénient dans les eaux de rejets.

Selon l'invention, on traite le milieu pollué par un mononitroalcool primaire de formule générale

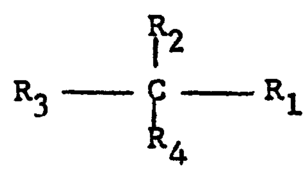

dans laquelle $R_1$et $R_4$ représentent un radical nitro ou hydroxyalkyl-inférieur, et $R_2$et $R_3$ un radical alkylinférieur ou hydroxyalkyl-inférieur.

Les monoalcools, les diols et triols mononitrés conviennent très avantageusement à la mise en oeuvre du nouveau procédé de traitement bactéricide et bactériostatique.

Parmi les monoalcools monitrés on peut mentionner le nitro-2 méthyl-2 propanol-1. Les nitro-2 méthyl-2 propane diol-1,3 et nitro-2 éthyl-2 propane diol-1,2 conviennent bien et le tris (hydroxyméthyl) nitrométhane conduit à d'excellents résultats.

Les composés à action bactéricide et bactériostatique sont utilisables sous forme cristalline ou en solution, de préférence on choisit des solutions aqueuses des dits

composés, dont la concentration est fonction de la solubilité du constituant et adaptée aux caractéristiques du procédé de traitement.

Les quantités de mononitroalcool employées sont en relation avec le degré de pollution du milieu et en général comprises entre 10 g et 100 g par $m^3$ de milieu pollué.

Le traitement du milieu pollué est effectué à un pH compris entre 6 et 14, de préférence 6 à 12. Il est voisin de 7, entre 6,9 et 7,3 pour le traitement des puits d'eau douce, entre 7 et 7,5 pour le traitement d'eaux secondaires.

En particulier dans le cas du traitement des boues, de provenances diverses le pH en cours de traitement est compris entre 7 et 14.

Le traitement est effectué à la température du milieu, c'est-à-dire entre 5° et 75°C. La dose mononitroalcool primaire peut être introduite dans le milieu en une seule fois en un point donné de l'installation, le milieu étant mis en circulation après l'addition du réactif. Le mononitroalcool peut également être progressivement mis en contact avec le milieu par introduction continue de doses régulées par l'intermédiaire de pompes doseuses en un point du milieu, ou en différents points assurant une distribution régulière dans tout le milieu pollué à traiter.

Suivant la nature du milieu à traiter, le traitement est unique tel celui des boues avant épandage ou celui d'un rejet secondaire aqueux, par contre le traitement peut être répétitif effectué en stades successifs, séparés par des périodes plus ou moins longues liées au milieu, comme dans le cas du traitement des puits d'eau douce ou pétroliers. Le traitement est continu quand il s'agit de la stérilisation des piscines ou du traitement tertiaire des eaux des stations d'épuration.

Le mode de mise en oeuvre du procédé de traitement bactéricide et bactériostatique est extrêmement souple

et adapté à la nature et au degré de pollution du milieu.

Le procédé de traitement bactéricide, bactériostatique et germicide par les mononitroalcools primaires a des applications très nombreuses. Il est notamment applicable au traitement tertiaire des eaux des stations d'épuration urbaines et industrielles, des eaux de piscine en continu en saison, des puits d'eau douce, des puits pétroliers en cours de forage ainsi que des boues extraites, des boues des stations d'épuration avant épandage, des moûts de betteraves, des liqueurs de papeteries...

Il est donné ci-après des exemples qui illustrent l'invention à titre non limitatif.

EXEMPLE 1

- Traitement d'eau d'un puits -

On réalise le traitement d'un puits pouvant produire 75 $m^3$/h envahi de bactéries sulfato-réductrices, en plaçant tout d'abord une pompe au fond de la crépine. On introduit une dose de 60 Kg de tris (hydroxyméthyl) nitrométhane en solution aqueuse à 50 % en poids, de pH 4,1 à 5,1, densité 1,22 à 1,24 Kg/l à 20° C, et l'on met l'eau en circulation pendant 6 heures. La température de l'eau du puits est de 12 à 15° C et le pH de 6,9 à 7,3. Après l'addition de la solution de tris (hydroxyméthyl) méthane avec mise en circulation on laisse au repos. Chaque jour, on met la pompe en service pour débiter pendant 1 heure, au bout de laquelle on effectue des prélèvements stériles pour ensemencer des milieux nutritifs spécifiques avec indicateur au sulfate de fer. Les ensemencements hebdomadaires ont été négatifs jusqu'au 74 ème jour, puis des virages positifs apparaissent avec précipitation de sulfure de fer après 3 semaines. On procède à un second traitement en injectant 45 Kg de solution aqueuse à 50 % de tris (hydroxyméthyl) nitrométhane dans les même conditions que précédemment, avec circulation d'eau pendant 6 heures. Le cycle de contrôle met en évidence des tests négatifs aux bactéries sulfato réductrices pendant deux mois ; les essais poursuivis après cette période étant toujours négatifs.

EXEMPLE 2

- Traitement d'eau d'un puits -

On procède à un traitement bactéricide en vue de la stérilisation de l'eau d'un puits renfermant des bactéricides sulfato-réductrices. Ce puits déjà traité par des biocides spécifiques de ce type de bactéries puis curé, est resté envahi par les bactéries.

On introduit 50 Kg de tris (hydroxyméthyl) nitrométhane dans le puits ; ce qui représente par rapport au volume d'eau libre dans le forage une concentration de l'ordre de 30 000 p.p.m. On brasse l'eau du puits contenant le tris (hydroxyméthyl) nitrométhane, en intéressant toute la tuyauterie émergée et immergée par retour de l'eau pompée dans le puits.

On laisse ensuite se poursuivre l'action du tris (hydroxyméthyl) nitrométhane dans le puits, celui-ci étant maintenu à l'arrêt pendant une semaine. Après ce temps de repos, on met le puits en purge intermittente, à raison de 20 à 30 $m^3$ par jour.

Après ce premier traitement et, à l'exception de trois contrôles bactériens effectués 53,60 et 81 jours après la date d'introduction du tris (hydroxyméthyl) nitrométhane, le puits est toujours exempt de bactéries sulfato-réductrices 100 jours après le traitement.

A titre préventif , on effectue un second traitement identique au précédent, on laisse agir le tris (hydroxyméthyl) nitrométhane en laissant le puits au repos pendant une semaine, après cette période on met le puits en débit à raison de 300 à 400 $m^3$/jour. 140 jours après le second traitement au biocide tris (hydroxyméthyl) nitrométhane, les contrôles des bactéries sulfato-réductrices sont toujours négatifs, et le forage a été remis en exploitation normale depuis plus d'un mois.

Le tris (hydroxyméthyl) nitrométhane est le seul produit biocide ayant réalisé la stérilisation des bactéries sulfato réductrices, présentes dans le puits depuis plusieurs années, et permettant la réutilisation normale du forage.

EXEMPLE 3

- Traitement d'eau secondaire -

On traite de l'eau secondaire provenant d'une station d'eaux d'égouts constituées d'eaux urbaines en plus grande proportion et d'eaux industrielles.

On introduit dans l'eau par l'intermédiaire de pompes doseuses une solution aqueuse de tris (hydroxyméthyl) nitrométhane à 50 % en poids de manière à avoir dans le milieu des doses de 10, 20 et 50 p.p.m du réactif dans le milieu, l'introduction se fait en continu et l'on procède au cours du traitement au contrôle bactériologique régulier du milieu.

A l'entrée, l'eau a les caractéristiques suivantes :

pH 7 à 7,5

| | |
|---|---|
| bactéries | 430.000 unités/ml |
| streptocoques | 750.000 unités/ml |

Après une première agitation, en fonction des doses de tris (hydroxyméthyl) nitrométhane ajouté, les caractéristiques de l'eau en sortie sont les suivantes :

| Concentration en tris (hydroxyméthyl) nitrométhane | 10 p.p.m | 20 p.p.m | 50 p.p.m |
|---|---|---|---|
| Bactéries | 93.000 | 3.600 | < 360 |
| Streptocoques | 93.000 | 7.500 | 3.500 |

EXEMPLE 4

- Traitement d'eau polluée en Streptocoques -

On traite une eau polluée par environ 1 million d'unités streptocoques par ml. On introduit dans l'eau par l'intermédiaire de pompes doseuses des quantités de nitro-2 méthyl-2 propanol en solution aqueuse correspondant respectivement à 50 p.p.m et 100 p.p.m.

Après introduction et agitation, on procède à des contrôles et la numération en streptocoques est la suivante :

| | |
|---|---|
| 50 p.p.m | 40.000 U/ml |
| 100 p.p.m | < 1.000 U/ml |

EXEMPLE 5

- Traitement d'eau polluée de papeterie -

On réalise en laboratoire des essais comparatifs en boite de Pétrie sur échantillons de pâte prélevés in situ et contaminés de façon naturelle.

On compare l'efficacité à différentes doses du tris (hydroxyméthyl) nitrométhane avec celle à doses équivalentes du bromacétoxybutène, produit réputé pour son activité, et à des moments identiques après traitement. On exprime l'efficacité en pourcentage par rapport à un témoin non traité et pollué selon la formule d'Abbott.

$$\text{efficacité} = 100\left(1 - \frac{\text{nombre de bactéries dans l'échantillon traité}}{\text{nombre de bactéries dans le témoin non traité pollué}}\right)$$

Les résultats sont consignés dans le tableau ci-dessous

| | | 1h. après traitement | 4h. après traitement | 7h. après traitement | 23h après traitement |
|---|---|---|---|---|---|
| bromacétoxybutène | 100ppm | 30 | 48 | 34 | 80 |
| | 50ppm | 35 | 56 | 22 | 69 |
| | 25ppm | 44 | 45 | 43 | 80 |
| tris (hydroxyméthyl) nitrométhane | 100ppm | 35 | 46 | 49 | 77 |
| | 50ppm | 43 | 52 | 22 | 76 |
| | 25ppm | 35 | 46 | 17 | 53 |

REVENDICATIONS

1. Procédé de traitement bactéricide et bactériostatique d'un milieu pollué par des bactéries et streptocoques, caractérisé en ce que l'on introduit dans le milieu pollué un mononitroalcool primaire de formule générale :

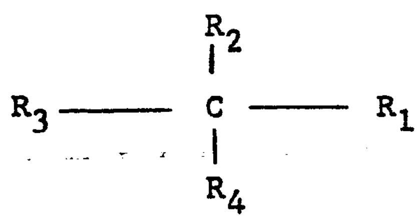

dans laquelle $R_1$ et $R_4$ représentent un radical nitro ou hydroxyalkylinférieur, et $R_2$ et $R_3$ un radical alkylinférieur ou hydroxyalkylinférieur, à une dose en relation avec le degré de pollution du milieu, de préférence comprise entre 10 g et 100 g par $m^3$ de milieu pollué.

2. Procédé de traitement bactéricide et bactériostatique selon la revendication 1, caractérisé en ce que le mononitroalcool primaire est le nitro-2 méthyl-2 propanol-1, le nitro-2 méthyl-2 propane diol-1,2, le nitro-2 éthyl-2 propane diol-1,2 ou le tris (hydroxyméthyl) nitrométhane.

3. Procédé de traitement bactéricide et bactériostatique d'un milieu pollué par des bactéries et streptocoques, caractérisé en ce que l'on introduit dans le milieu pollué du tris (hydroxyméthyl) nitrométhane.

4. Procédé de traitement bactéricide et bactériostatique selon la revendication 3, caractérisé en ce que le tris (hydroxyméthyl) nitrométhane est introduit à une

dose en relation avec le degré de pollution du milieu, de préférence comprise entre 10 et 100 g par $m^3$ du milieu pollué.

5. Procédé de traitement bactéricide et bactériostatique selon une quelconque des revendications 1 à 4, caractérisé en ce que la dose de mononitroalcool primaire est introduite en une fois dans le milieu pollué.

6. Procédé de traitement bactéricide et bactériostatique selon une quelconque des revendications 1 à 5, caractérisé en ce que le mononitroalcool primaire est introduit en continu par doses régulées.

7. Procédé de traitement bactéricide et bactériostatique selon une quelconque des revendications 1 à 6, caractérisé en ce que le traitement est répétitif.

8. Procédé de traitement bactéricide et bactériostatique selon une quelconque des revendications 1 à 7, caractérisé en ce que le pH du milieu pendant le traitement est compris entre 6 et 14 de préférence 6 à 12.

9. Procédé de traitement bactéricide et bactériostatique selon une quelconque des revendications 1 à 8, caractérisé en ce que le traitement est effectué à température comprise entre 5 et 75 °C.

10. Application du procédé de traitement bactéricide et bactériostatique selon une quelconque des revendications 1 à 9, au traitement tertiaire des eaux des stations d'épuration urbaines et industrielles, des eaux des piscines en continu, en saison des puits d'eau douce, des puits pétroliers en cours de forage et des boues extraites, des boues des stations d'épuration, des moûts de betteraves et des liqueurs de papeterie.

0004217

Numéro de la demande

Office européen des brevets

# RAPPORT DE RECHERCHE EUROPEENNE

EP 79 40 0105

| Catégorie | DOCUMENTS CONSIDERES COMME PERTINENTS — Citation du document avec indication, en cas de besoin, des parties pertinentes | Revendication concernée | CLASSEMENT DE LA DEMANDE (Int. Cl.²) |
|---|---|---|---|
| X | FR - A - 1 565 736 (HENKEL)<br>* Page 1, colonne de droite *<br>& NL - A - 68 03252<br>-- | 1,2,7 | A 61 L 13/00<br>C 02 B 3/06 |
| X | FR - A - 1 565 749 (HENKEL)<br>* Page 1, colonne de droite; page 2, lignes 12-22 *<br>-- | 1,2,7 | |
| | FR - A - 2 331 356 (I.C.I.)<br>* Page 9; revendication 1 *<br>-- | 1,7 | DOMAINES TECHNIQUES RECHERCHES (Int. Cl.²)<br>A 61 L 13/00<br>C 02 B 3/06 |
| | US - A - 3 024 192 (E.O. BENNETT)<br>* Colonne 1, lignes 60-66; colonne 2, lignes 52-72 *<br>---- | 1,7 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 18-05-1979 | PELTRE |

OEB Form 1503.1 06.78